(19) **Europäisches Patentamt**
**European Patent Office**
**Office européen des brevets**

(11) **EP 1 420 497 B1**

(12) **EUROPÄISCHE PATENTSCHRIFT**

(45) Veröffentlichungstag und Bekanntmachung des Hinweises auf die Patenterteilung:
**20.06.2018   Patentblatt 2018/25**

(51) Int Cl.:
***H02J 7/14*** (2006.01)

(21) Anmeldenummer: **02102591.1**

(22) Anmeldetag: **15.11.2002**

(54) **Verfahren zur Regelung der elektrischen Batterieleistung in einem Kraftfahrzeug**

Method for regulating battery power in a vehicle

Procédé de commande de la puissance de la batterie dans un véhicule

(84) Benannte Vertragsstaaten:
**DE FR GB**

(43) Veröffentlichungstag der Anmeldung:
**19.05.2004   Patentblatt 2004/21**

(73) Patentinhaber: **Ford Global Technologies, LLC**
**Dearborn, MI 48126 (US)**

(72) Erfinder:
• **van Dongen, Tom**
**5126 PS Gilze (NL)**

• **Eifert, Mark**
**52070, Aachen (DE)**

(74) Vertreter: **Illing, Rolf et al**
**Ford-Werke GmbH**
**Patentabteilung NH-364**
**Henry-Ford-Straße 1**
**50735 Köln (DE)**

(56) Entgegenhaltungen:
**EP-A2- 1 199 205     US-A- 5 929 609**
**US-A- 6 166 523**

**Beschreibung**

Die Erfindung betrifft ein Verfahren zur Regelung der elektrischen Batterieleistung, die der mit dem Bordnetz eines Kraftfahrzeuges gekoppelten Batterie des Kraftfahrzeuges zugeführt oder entnommen wird, wobei die vom Kraftfahrzeug verbrauchte elektrische Gesamtleistung von einem an die Brennkraftmaschine des Kraftfahrzeuges gekoppelten Generator erzeugt wird. Ferner betrifft die Erfindung einen Regler zur Durchführung eines derartigen Verfahrens.

An das elektrische Bordnetz eines Kraftfahrzeuges sind die elektrischen Verbraucher des Kraftfahrzeuges sowie in der Regel eine wiederaufladbare Batterie gekoppelt. Die dem Bordnetz entnommene elektrische Energie wird von einem Generator ("Lichtmaschine") erzeugt, welcher von der Brennkraftmaschine des Kraftfahrzeuges angetrieben wird. Die an das Bordnetz gekoppelte Batterie dient dazu, eine Energiereserve beziehungsweise einen Puffer zu bilden, um jederzeit ausreichend Leistung für z. B. das Anlassen der Brennkraftmaschine bereitzustellen.

Die Versorgung des elektrischen Bordnetzes durch den Generator wird bei konventionellen Ladereglern derart geregelt, daß eine bestimmte Spannung oberhalb der Leerlaufspannung der Batterie eingestellt wird, um den Ladezustand der Batterie bei nahezu 100% zu halten. Auf diese Weise soll die Spannung im Bordnetz auf einem stationären Wert gehalten werden und stets ausreichend Energie für das Anlassen der Brennkraftmaschine zur Verfügung stehen. Unter dem Gesichtspunkt einer effizienten Energieausnutzung ist eine derartige Regelungsstrategie allerdings ungünstig, da hierbei sehr viel Energie in Gasreaktionen in der Batterie verloren geht. Auch ist ein Ladezustand von nahezu 100% bei Verwendung eines regenerativen Bremssystems nicht empfehlenswert, da die Batterie bei einem derartigen Ladezustand die beim regenerativen Bremsen freigesetzte elektrische Leistung kaum aufnehmen kann. Deshalb sind Batterieladesysteme vorgeschlagen worden, bei denen der Ladezustand in einem Fenster bzw. um einen Betriebspunkt herum gehalten wird, wobei das Fenster bzw. der Betriebspunkt deutlich unterhalb von 100 % liegt. Ein derartiges System ist beispielsweise aus der US 6 091 228 bekannt. Ein weiteres Phänomen bei bekannten Kraftfahrzeugen besteht darin, daß die Erzeugung von elektrischer Leistung durch den Generator nicht in allen Motorbetriebszuständen gleich effizient ist. So ist beispielsweise für eine Leistungserzeugung im Motorleerlauf pro zusätzlich erzeugter Leistung tendenziell ein höherer zusätzlicher Kraftstoffeinsatz erforderlich, als dies z. B. in einem Normalbetrieb des Motors bei höheren erzeugten Drehmomenten der Fall ist. Die US 5 929 609 zeigt ein Verfahren gemäss dem Obenbegriff des Anspruchs 1. Vor diesem Hintergrund war es Aufgabe der vorliegenden Erfindung, ein Verfahren zur Regelung der einer Batterie entnommenen beziehungsweise zugeführten elektrischen Leistung ("Batterieleistung") bereitzustellen, welches eine verbesserte Ausnutzung des verbrauchten Kraftstoffes ermöglicht.

Diese Aufgabe wird durch ein Verfahren mit den Merkmalen des Anspruchs 1 sowie durch einen Regler mit den Merkmalen des Anspruchs 6 gelöst.

Vorteilhafte Ausgestaltungen sind in den Unteransprüchen enthalten.

Das erfindungsgemäße Verfahren dient der Regelung der elektrischen Batterieleistung, worunter definitionsgemäß die elektrische Leistung verstanden wird, die einer mit dem Bordnetz eines Kraftfahrzeuges gekoppelten Batterie des Kraftfahrzeuges zugeführt oder entnommen wird. Per Konvention kann dabei z. B. eine der Batterie zugeführte Leistung einen positiven Wert und eine entnommene Leistung einen negativen Wert haben. Bei dem Verfahren wird die vom Kraftfahrzeug (d. h. Bordnetz einschließlich der Batterie) verbrauchte elektrische Gesamtleistung von einem an die Brennkraftmaschine des Kraftfahrzeuges gekoppelten Generator erzeugt. Das Verfahren ist dadurch gekennzeichnet, daß eine Kostenfunktion berechnet wird, deren Wert ein Maß für den Kraftstoffmehrverbrauch, der für die Erzeugung der elektrischen Gesamtleistung durch den Generator erforderlich ist, im Verhältnis zu der mit diesem Mehrverbrauch erzeugten Gesamtleistung wiedergibt. Mit Hilfe dieser Kostenfunktion wird dann ein Optimalwert der Batterieleistung derart bestimmt, daß der Wert der Kostenfunktion bei Einstellung des Optimalwertes ein Minimum annimmt.

Die bei dem Verfahren verwendete Kostenfunktion spiegelt die Effizienz bzw. den Wirkungsgrad der Stromerzeugung wider, da diese den Kraftstoffverbrauch in Beziehung zu der damit erzeugten elektrischen Leistung setzt. Je kleiner der Wert der Kostenfunktion ist, desto effizienter wird der Kraftstoff in elektrische Energie umgewandelt.

Die Abhängigkeit der Kostenfunktion von verschiedenen Zustandsgrößen und Parametern kann theoretisch hergeleitet und/oder empirisch ermittelt werden. Dabei zeigt es sich, daß unter gegebenen Rahmenbedingungen bei einem bestimmten Wert der erzeugten elektrischen Leistung die Kraftstoffausnutzung optimal, d. h. der Wert der Kostenfunktion minimal ist. Bei dem erläuterten Verfahren wird nun die Batterieleistung als einstellbarer Parameter behandelt, dessen Wert so bestimmt wird, daß die Kostenfunktion minimiert wird. Durch ein Laden der Batterie kann nämlich die verbrauchte Gesamtleistung des Bordnetzes erhöht und durch ein Entladen der Batterie verringert werden. Durch Veränderung der Batterieleistung kann somit die verbrauchte Gesamtleistung in einen Punkt verlagert werden, in dem die Kostenfunktion minimal ist. Die Bereitstellung elektrischer Energie für das Bordnetz erfolgt dann jederzeit unter optimaler Kraftstoffausnutzung.

Gemäß einer bevorzugten Ausgestaltung des Verfahrens werden bei der Bestimmung des Optimalwertes die Batterieladeverluste berücksichtigt. Batterieladeverluste entstehen aufgrund der realen physikalischen und chemischen Prozesse und lassen sich durch die Differenz zwischen der einer Batterie beim Laden zugeführten elektrischen Energie und der beim Entladen aus der Batterie wieder entnehmbaren Energie quantifizieren. Die Berücksichtigung der Batterieladeverluste erlaubt eine realistischere Optimierung der Stromerzeugung, da durch diese die Kosten für die Verwendung der Batterie als Puffer berücksichtigt werden.

Bei der vorstehend beschriebenen Ausführungsart des Verfahrens werden die Batterieladeverluste vorzugsweise durch eine laufende Mittelwertbildung der gemessenen Effizienz der Batterieladung und Batterieentladung bestimmt. Auf diese Weise werden die für die Batterieladeverluste relevanten Parameter ständig auf einem aktuellen Wert gehalten.

Gemäß der Erfindung wird die tatsächlich eingestellte Batterieleistung gegenüber dem berechneten Optimalwert erhöht, falls der Ladezustand der Batterie niedriger als ein vorgegebener Wert ist, und verringert, falls der Ladezustand der Batterie höher als ein vorgegebener Wert ist. Durch diese Korrektur des Optimalwertes kann sichergestellt werden, daß ein gewünschter vorgegebener Wert für den Ladezustand der Batterie näherungsweise eingehalten wird, bzw. daß der Ladezustand der Batterie in einem vorgegebenen Fenster gehalten wird.

Vorzugsweise wird das Verfahren durch eine Strategie zu einem regenerativen Bremsen des Kraftfahrzeuges ergänzt. Beim regenerativen Bremsen wird die Bremsenergie teilweise in elektrische Energie umgewandelt. Die in der Bewegung des Fahrzeuges gespeicherte kinetische Energie geht daher nicht ganz in Reibungswärme über - und somit der Energiebilanz verloren -, sondern wird überwiegend in nutzbare elektrische Energie verwandelt.

Das regenerative Bremsen wird dabei vorzugsweise in einem Gang durchgeführt, welcher die erzeugte elektrische Energie beziehungsweise den Energiefluß zur Batterie maximiert.

Die Erfindung betrifft ferner einen Regler zur Regelung der elektrischen Batterieleistung, die der mit dem Bordnetz eines Kraftfahrzeuges gekoppelten Batterie des Kraftfahrzeuges zugeführt oder entnommen wird, wobei die vom Kraftfahrzeug verbrauchte elektrische Gesamtleistung von einem an die Brennkraftmaschine des Kraftfahrzeuges gekoppelten Generator erzeugt wird. Der Regler ist dadurch gekennzeichnet, daß dieser dahingehend ausgebildet ist, ein Verfahren der vorstehend erläuterten Art durchzuführen. Der Regler kann somit eine Kostenfunktion berechnen, welche das Verhältnis des Kraftstoffmehrverbrauches zur damit erzeugten elektrischen Gesamtleistung bestimmt. Ferner kann der Regler einen Optimalwert der Batterieleistung derart bestimmen und einstellen, daß die genannte Kostenfunktion minimiert wird.

Ein wesentlicher Aspekt der vorliegenden Erfindung besteht darin, daß für die Ladestrategie nicht nur der Ladezustand (SOC) der Batterie, der mittels verschiedener bekannter Verfahren näherungsweise z. B. anhand der Batteriespannung, der Batterietemperatur und der Batterieleistung bestimmt werden kann, herangezogen wird, sondern auch die Kraftstoffeffizienz der Energieerzeugung durch den Generator durch Einführung einer Kostenfunktion mit berücksichtigt wird. Dies führt z. B. dazu, daß im Leerlaufbetrieb des Verbrennungsmotors die elektrische Leistung verstärkt über die Batterie bereitgestellt wird, solange der Ladezustand der Batterie dies erlaubt, um die Kraftstoffeffizienz insgesamt zu erhöhen. Die in diesem Zustand entnommene Leistung wird der Batterie in energetisch effizienteren Betriebsbereichen des Generators oder bei einem generatorischen Bremsen wieder zugeführt. Trotz der Batterieladeverluste kann hierdurch in der Gesamtbilanz eine Kraftstoffersparnis erzielt werden.

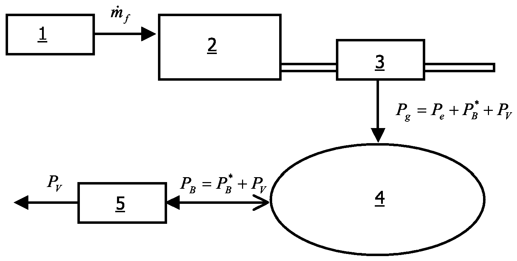

Im Folgenden wird die Erfindung mit Hilfe der beigefügten Figur beispielhaft erläutert. Die einzige Abbildung zeigt die Systemkomponenten, die an der Durchführung des erfindungsgemäßen Verfahrens beteiligt sind.

Zu erkennen ist in der Abbildung zunächst eine Brennkraftmaschine 2, welche in bekannter Weise unter Zufuhr eines Kraftstoffmassenflusses $\dot{m}_f$ aus einem Kraftstofftank 1 eine mechanische Leistung erzeugt. Ein Teil dieser mechanischen Leistung wird von einem Generator 3 (Lichtmaschine), der an die Kurbelwelle der Brennkraftmaschine 2 gekoppelt ist, abgegriffen und in eine elektrische Leistung $P_g$ umgewandelt. Die elektrische Leistung $P_g$ wird dem symbolisch dargestellten Bordnetz 4 des Kraftfahrzeuges zugeführt. An das Bordnetz 4 sind alle elektrischen Verbraucher angeschlossen, wobei die von diesen benötigte elektrische Leistung mit $P_e$ bezeichnet wird.

An das Bordnetz 4 ist ferner eine wiederaufladbare Akkumulatorbatterie 5 angekoppelt, wobei zwischen dem Bordnetz 4 und der Batterie 5 die elektrische Leistung $P_B$ ausgetauscht wird. Die Vorzeichenkonvention für die Leistung $P_B$ ist vorliegend so gewählt, daß bei einem Laden der Batterie $P_B > 0$ und bei einem Entladen der Batterie $P_B < 0$ ist.

Des Weiteren ist in der Abbildung erkennbar, daß sich die Batterieleistung $P_B$ aus zwei Teilen zusammensetzt: erstens einer reversiblen Batterieleistung $P_B^*$, die den Energieanteil erfaßt, welcher der Batterie 5 zu 100% wieder entnehmbar ist, und zweitens einem Batterieladeverlust $P_V$, welcher bei jedem Lade- und Entladevorgang der Batterie 5 unwiderruflich verloren geht.

Während herkömmliche Verfahren zur Kontrolle der Batterieladung eine konstante Spannung der Batterie 5 einzuhalten versuchen, wird vorliegend zur Verbesserung der Kraftstoffausnutzung eine Strategie mit einer variablen Stromerzeugung des Generators 3 vorgeschlagen. Diese Strategie besteht aus zwei Teilen, nämlich erstens aus einer optimalen Ladestrategie bei einem positiven Antrieb des Kraftfahrzeuges, und zweitens aus einer Strategie des regenerativen Bremsens, wenn die mechanischen Bremsen des Kraftfahrzeuges aktiv sind.

Während der optimalen Ladestrategie wird der Strom-Betriebspunkt des Generators 3 mit einem Optimierungsalgorithmus für die Umwandlung chemischer Leistung, ausgedrückt als Kraftstoffmassenfluß $\dot{m}_f$ in Bezug auf die von den elektrischen Lasten benötigte elektrische Leistung $P_g$, berechnet. Bei dieser Optimierung wird darüber entschieden, ob die Batterie 5 geladen oder entladen wird beziehungsweise ob überhaupt kein Ladungstransfer mit der Batterie 5 stattfindet.

Die genannte Entscheidung wird auf der Basis einer Kostenfunktion $J$ getroffen. Dazu wird die von den elektrischen Lasten (einschließlich der Batterie 5) benötigte Gesamtleistung $P_g$ gemessen. Diese Gesamtleistung $P_g$ muß vom Generator 3 erzeugt werden, was zu einem Kraftstoffmehrverbrauch der Brennkraftmaschine 2 führt. Der Anstieg des Kraftstoffmassenflusses $\Delta \dot{m}_f$ in Bezug auf den normalen, für die Bewegung des Kraftfahrzeuges benötigten Kraftstofffluß kann ermittelt werden. Sodann kann die Kostenfunktion $J$ berechnet werden als das Verhältnis von Kraftstoffmehrverbrauch zur Gesamtleistung gemäß:

$$J = \frac{\Delta \dot{m}_f}{BSFC_{Best} \cdot P_g} = f(n, T, P_g)$$

Hierin ist $BSFC_{Best}$ der beste spezifische Verbrauchswert des Verbrennungsmotors, $n$ die aktuelle Drehzahl der Brennkraftmaschine 2 und $T$ das von der Brennkraftmaschine 2 abgegebene Drehmoment. Die Kostenfunktion wird vom besten möglichen spezifischen Verbrauch genormt, damit Ihr Wert immer mindestens und im besten Fall eins ist. Die Normierung erlaubt einen Vergleich zwischen verschieden Verbrennungsmotoren.

Wie vorstehend erläutert, setzt sich die Gesamtleistung $P_g$, die vom Generator 3 an das Bordnetz 4 zur Verfügung zu stellen ist, aus einer von der Batterie 5 aufgenommenen Leistung $P_B$ und einer von den übrigen elektrischen Verbrauchern aufgenommenen Leistung $P_e$ zusammen. Die Batterieleistung setzt sich wiederum aus einem reversiblen Anteil $P_B^*$, welcher ohne Verlust der Batterie wieder entnommen werden kann, und einem Batterieladeverlust $P_V$ zusammen, d.h.:

$$P_g = P_e + P_B = P_e + P_B^* + P_V.$$

Die in der Batterie auftretenden Batterieverluste $P_V$ werden während des Ladens und des Entladens über ein gleitendes Zeitfenster gemessen und verwendet, um die durchschnittlichen Lade- und Entladeeffizienzen zu berechnen. Die hieraus erhaltenen durchschnittlichen Batterieladeverluste werden auf diese Weise kontinuierlich auf dem neuesten Stand gehalten.

Durch Veränderung der Batterieleistung $P_B$ kann die Gesamtleistung $P_g$ variiert und damit Einfluß auf die Kostenfunktion $J$ genommen werden. Dies kann insbesondere dazu ausgenutzt werden, die Gesamtleistung möglichst nahe an ein Minimum der Kostenfunktion zu schieben, d.h. die Erzeugung elektrischer Leistung aus Kraftstoff möglichst effizient zu betreiben. Der zu einem solchen Minimum der Kostenfunktion gehörende Optimalwert der Batterieleistung sei dabei mit $P_{B,opt}$ bezeichnet. Dieser Optimalwert kann mittels numerischer Näherungsmethoden aus den vorstehenden Zusammenhängen berechnet werden.

Um einen vorgegebenen nominellen Ladezustand (SOC: state of Charge) der Batterie aufrecht zu erhalten, wird weiterhin noch eine Korrektur der berechneten optimalen Batterieleistung $P_{B,opt}$ vorgenommen. Wenn der gemessene aktuelle Ladezustand SOC der Batterie 5 geringer als der Ziel-SOC ist, wird die optimale Batterieleistung $P_{B,opt}$ erhöht. Wenn dagegen der aktuelle SOC oberhalb des Ziel-SOC liegt, wird die optimale Batterieleistung verringert.

Wenn das Kraftfahrzeug nicht angetrieben, sondern gebremst wird, wird in einer Strategie des regenerativen Bremsens Energie aus dem Bremsvorgang zurückgewonnen und in elektrische Energie umgewandelt. Dabei wird vorzugsweise ein Gang gewählt, welcher die in die Batterie 5 fließende Energie maximiert.

**Patentansprüche**

1. Verfahren zur Regelung der elektrischen Batterieleistung, die der mit dem Bordnetz (4) eines Kraftfahrzeuges gekoppelten Batterie (5) des Kraftfahrzeuges zugeführt oder entnommen wird, wobei die vom Kraftfahrzeug verbrauchte elektrische Gesamtleistung ($P_g$) von einem an die Brennkraftmaschine (2) des Kraftfahrzeuges gekoppelten Generator (3) erzeugt wird, wobei
   eine Kostenfunktion berechnet wird, welche ein Maß für den Kraftstoffmehrverbrauch bezogen auf die mit diesem Mehrverbrauch erzeugte elektrischen Gesamtleistung darstellt, und daß ein Optimalwert der Batterieleistung so bestimmt wird, daß die Kostenfunktion minimiert wird,
   **dadurch gekennzeichnet, daß**
   die Gesamtleistung sich aus einer von der Batterie (5) aufgenommenen Batterieleistung ($P_B$) und einer von den übrigen elektrischen Verbrauchern aufgenommenen Leistung ($P_e$) zusammensetzt,
   wobei die eingestellte Batterieleistung gegenüber dem berechneten Optimalwert erhöht oder verringert wird, um den Ladezustand der Batterie (5) in einem vorgegebenen Wertebereich zu halten.

2. Verfahren nach Anspruch 1,
   **dadurch gekennzeichnet, daß**
   die Batterieladeverluste ($P_V$) bei der Bestimmung des Optimalwertes berücksichtigt werden.

3. Verfahren nach Anspruch 2,

**dadurch gekennzeichnet, daß**
die Batterieladeverluste ($P_V$) durch eine laufende Mittelwertbildung der gemessenen Effizienz der Batterieladung und Batterieentladung bestimmt werden.

4. Verfahren nach mindestens einem der Ansprüche 1 bis 3,
**dadurch gekennzeichnet, daß**
ein regeneratives Bremsen des Kraftfahrzeuges durchgeführt wird, bei dem die Bremsenergie zumindest teilweise in elektrische Energie umgewandelt wird.

5. Verfahren nach Anspruch 4,
**dadurch gekennzeichnet, daß**
das regenerative Bremsen in einem Gang durchgeführt wird, welcher die erzeugte elektrische Energie maximiert.

6. Regler zur Regelung der elektrischen Batterieleistung, die der mit dem Bordnetz (4) eines Kraftfahrzeuges gekoppelten Batterie (5) des Kraftfahrzeuges zugeführt oder entnommen wird, wobei die vom Kraftfahrzeug verbrauchte elektrische Gesamtleistung ($P_g$) von einem an die Brennkraftmaschine (2) des Kraftfahrzeuges gekoppelten Generator (3) erzeugt wird,
**dadurch gekennzeichnet, daß**
dieser dahingehend ausgebildet ist, ein Verfahren nach mindestens einem der Ansprüche 1 bis 5 durchzuführen.

## Claims

1. Method for controlling the electrical battery power which is supplied to or drawn from the battery (5) of a motor vehicle which is coupled to the power supply system (4) of the motor vehicle, the total electrical power ($P_g$) consumed by the motor vehicle being generated by a generator (3) which is coupled to the internal combustion engine (2) of the motor vehicle, wherein a cost function is calculated which represents a measure of the additional fuel consumption based on the total electrical power generated by this additional consumption, and that an optimal value for the battery power is determined such that the cost function is minimized,
**characterized in that**
the total power comprises a battery power ($P_B$) consumed by the battery (5) and a power ($P_e$) consumed by the other electrical loads, wherein the set battery power is greater than or less than the calculated optimal value in order to keep the state of charge of the battery (5) within a predetermined value range.

2. Method according to Claim 1,

**characterized in that**
the battery charging losses ($P_V$) are taken into account when determining the optimal value.

3. Method according to Claim 2,
**characterized in that**
the battery charging losses ($P_V$) are determined by continually averaging the measured efficiency of the battery charging and battery discharging.

4. Method according to one of Claims 1 to 3,
**characterized in that**
regenerative braking of the motor vehicle is carried out in which the braking energy is converted at least partially to electrical energy.

5. Method according to Claim 4,
**characterized in that**
the regenerative braking is carried out in a gear which maximizes the generated electrical energy.

6. Controller for controlling the electrical battery power which is supplied to or drawn from the battery (5) of a motor vehicle which is coupled to the power supply system (4) of the motor vehicle, the total electrical power ($P_g$) consumed by the motor vehicle being generated by a generator (3) which is coupled to the internal combustion engine (2) of the motor vehicle,
**characterized in that**
the controller is designed to carry out a method according to at least one of Claims 1 to 5.

## Revendications

1. Procédé de régulation de la puissance électrique de batterie qui est délivrée à la batterie (5) d'un véhicule, laquelle batterie est couplée au réseau de bord (4) d'un véhicule automobile ou en est prélevée, dans lequel la puissance électrique totale ($P_g$) consommée par le véhicule automobile est générée par un générateur (3) couplé au moteur à combustion interne (2) du véhicule automobile,
dans lequel on calcule une fonction de coût qui représente une mesure de la consommation de carburant par rapport à la puissance électrique totale générée par ladite surconsommation et dans lequel on détermine une valeur optimale de la puissance de batterie de manière à minimiser la fonction de coût,
**caractérisé en ce que** la puissance totale se compose d'une puissance de batterie prélevée ($P_B$) sur la batterie (5) et de la puissance absorbée ($P_e$) par les autres charges électriques,
dans lequel la puissance de batterie réglée est augmentée ou réduite par rapport à la valeur optimale calculée afin de maintenir l'état de charge de la batterie (5) dans une plage de valeurs prédéterminée.

**2.** Procédé selon la revendication 1, **caractérisé en ce que** les pertes de charge de la batterie ($P_V$) sont prises en compte lors de la détermination de la valeur optimale.

**3.** Procédé selon la revendication 2, **caractérisé en ce que** les pertes de charge de la batterie ($P_V$) sont déterminées par calcul d'une moyenne glissante du rendement mesuré de la charge de la batterie et de la décharge de la batterie.

**4.** Procédé selon au moins l'une des revendications 1 à 3, **caractérisé en ce qu'**il est procédé à un freinage par récupération du véhicule automobile lors duquel l'énergie de freinage est au moins partiellement convertie en énergie électrique.

**5.** Procédé selon la revendication 4, **caractérisé en ce que** le freinage par récupération est effectué pour un rapport de transmission qui rend maximale l'énergie électrique générée.

**6.** Régulateur destiné à réguler la puissance électrique de batterie qui est délivrée à la batterie (5) d'un véhicule automobile, laquelle batterie est couplée au réseau de bord (4) du véhicule automobile ou en est prélevée, dans lequel la puissance électrique totale ($P_g$) consommée par le véhicule automobile est générée par un générateur (3) couplé au moteur à combustion interne (2) du véhicule automobile, **caractérisé en ce qu'**il est conçu pour mettre en oeuvre un procédé selon au moins l'une des revendications 1 à 5.

$$\dot{m}_f$$

| | |
|---|---|
| **1** | |

| | |
|---|---|
| **2** | |

| | |
|---|---|
| **3** | |

$$P_g = P_e + P_B^* + P_V$$

**4**

$$P_B = P_B^* + P_V$$

$$P_V$$

| | |
|---|---|
| **5** | |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6091228 A

- US 5929609 A